# EUROPEAN PATENT SPECIFICATION

(11) **EP 2 220 814 B1**
(45) Date of publication and mention of the grant of the patent: **25.04.2018**
(21) Application number: 08847686.6
(22) Date of filing: 04.11.2008
(51) Int. Cl.: H04L 12/24, H04L 29/08, H04L 29/12

(54) **METHOD FOR MANAGING NETWORK COMPONENTS IN A NETWORK, AS WELL AS A NETWORK COMPONENT**
VERFAHREN ZUM VERWALTEN VON NETZWERK KOMPONENTEN, UND NETZWERK KOMPONENTE
PROCÉDÉ POUR GÉRER DES COMPOSANTS DE RÉSEAU DANS UN RÉSEAU, ET UN COMPOSANT DE RÉSEAU

(30) Priority: 09.11.2007 DE 102007053916
(43) Date of publication of application: 25.08.2010
(73) Proprietor: Thomson Licensing, 92130 Issy-les-Moulineaux (FR)
(72) Inventor: HÜTTER, Ingo, 30982 Pattensen (DE); WEBER, Michael, 30559 Hannover (DE)
(74) Representative: Huchet, Anne
(86) International application number: PCT/EP2008/064947
(87) International publication number: WO 2009/059973

(56) References cited:
- WO-A-2006/054224
- US-A1- 2002 027 569
- US-A1- 2003 208 572
- US-A1- 2006 245 431

## Description

The invention relates to a method for managing network components in a network and to a network component.

### Prior art

By integrating a plurality of electronic devices, networks can be formed in which so-called distributed applications are executed. These are application programs accessing a plurality or all of the electronic devices of the network, wherein said electronic devices serve as network components. The network components may, for example, be a printer, a scanner, a fax machine, or the like, which can be accessed by another network component in the network, for example a personal computer.

Working with distributed applications in networks is facilitated by what is called discovery methods, said methods forming a central technology which must be functioning properly to ensure system acceptance. Discovery methods are methods for discovering and registering new network components in a network as well as for detecting that network components that were previously connected have been removed from the network. Furthermore, discovery methods are applied to ensure that a specific network component, for example a personal computer, finds a further network component, for example a printer for printing a document.

There are numerous known discovery methods, for example the discovery methods of "Universal Plug and Play" (UPnP, see www.UPnP.org) and "Multicast DNS" (MDNS - "Multicast Domain Name System" (see http:www.multicastdns.org/) as well as "Service Location Protocol" which is described in the technical document entitled "Request for Comments 2608" (RFC 2608, see http://www.faqs.org/rfcs/rfc2608.html).

All of these known discovery methods utilize a similar basic principle. Therein, data packets, or so-called discovery packets, are transmitted among network components of the network by means of Multicast or group call. Multicast is to advantage in that the data packets thus transmitted reach all network components in a network without any difficulty, with the result that the discovery method is simplified.

The integration of a plurality of small networks serving as subnets to form a large network presents a different situation. As a rule, the subnets are interconnected through switching units, for example gateways.

The known discovery methods described above are reliable and fast where the discovery and archiving of network component in a single subnet are concerned. However, the task of finding network components in other subnets is problematic. On the one hand, Multicast discovery packets typically have a low "time-to-live" value (TTL value). The TTL value of a data packet determines how often said data packet can be transferred among network components before it is deleted. A low TTL value is chosen to prevent the network from being "flooded" by discovery packets. This, however, may result in a discovery packet which does not reach a subnet of a sought-for network component at all. What is more, the transfer of Multicast-based data packets is frequently deactivated in gateways (in order to minimize data traffic). In these cases, it is entirely impossible for a discovery packet to cross the boundaries of subnets in order to reach other subnets.

These problems can be counteracted by introducing central servers which provide information about network components from different subnets. This is indeed done in practice. However, such a solution is usually not suitable for "plug and play" functionality. Furthermore, a failure of such a central server may easily give rise to problems.

A method for finding devices in a network is known from EP 1339 190 A2, wherein a first finding device is arranged in a first subnet and a second findable device is arranged in a second subnet and the two subnets are connected to each other. According to this known method, the second device is found by the first device by means of a name server. On request, the second device subsequently transmits information concerning the second subnet to the first device. Using this information, the first device is able to locate other devices in the second subnet.

The method known from EP 1339 190 A2 is to disadvantage in that the information concerning the second subnet and transmitted from the second device to the first device is only current at the time of request. If the configuration of the second subnet is changed, for example by adding further devices to the subnet or by removing connected devices, the first device is not informed about this fact until the second device receives a new request.

US2003/0208572 describes a topology change notification mechanism to notify topology changes in a subnet of a switched fabric including at least a host system, a target system and switches interconnected via links.

US2006/0245431 describes a method for processing operations associated with resources on a local network.

### Invention

The invention aims at providing a method for managing network components in a network and a network component, wherein the detection of newly added or removed network components can be achieved across subnet boundaries quickly, reliably and with a minimum of required computer power. Furthermore, a load of the network caused by additional data exchange should be minimized.

This problem is solved by the invention by means of a method for managing network components in a network according to the independent Claim 1 and a network component according to the independent Claim 14.

According to the invention, a method is provided for managing network components in a network comprising a request subnet with request network components and a select subnet with select network components, wherein a requesting network component out of the request network components of the request subnet transmits a registration request to a selected network component out of the select network components of the select subnet and, based on the registration request, the selected network component transmits information concerning the configuration of the select subnet at the time of registration request to the requesting network component, wherein, based on the registration request, the selected network component, furthermore, transmits further information concerning the configuration of the select subnet to the requesting network component at a later point in time which is chronologically following the registration request.

According to a further aspect of the invention, a network component is provided, comprising a connecting assembly which is configured to establish connections for electronic data exchange with select network components of a select subnet in a network; a retrieving assembly which is configured to retrieve a registration request from a requesting network component in a request subnet connected to the select subnet in the network; a determining assembly which is configured to determine information concerning the configuration of the select subnet and, at a later point in time, to determine further information concerning the configuration of the select subnet; a registration assembly which is configured to make a registration of the requesting network component based on the registration request; and a transmission assembly which is configured to transmit the information determined and the further information to the requesting network component in the request subnet based on the registration.

The invention comprises the idea of supplying the requesting network component with information concerning the configuration of the select subnet even at future points in time, based on a single registration request addressed to the selected network component. In other words, the information concerning the configuration of the select subnet is, initially, transmitted to the requesting network component immediately after the registration request has been received. Herein, "immediately" means that any possibly occurring delay is, in essence, depending on software-related and/or hardware-related processing and transmission times. Subsequently, the information concerning the configuration is again retrieved and transmitted to the requesting network component at a later point in time or at later points in time.

Based on the registration request, a registration of the requesting network component is, therefore, made with the selected network component such that the requesting network is kept informed about the configuration of the select subnet. Hence, this is a discovery method across network or subnet boundaries which, as a matter of principle, is not restricted over time. It is, however, possible to provide a restriction over time in the first place by inserting an appropriate message in the registration request.

Herein, the designations of the subnets in terms of a request or select subnet and of the network components in terms of a requesting or selected network component characterize the particular subnets and network components in relation to their behavior in the method described herein and are only intended for easy reference. The designations do not describe any inherent properties of the subnets or their network components. In particular, the roles of the subnets and the network components can be exchanged, with the result that the network component referred to as "selected" above registers with the network component referred to as "requesting" above. In addition to the request subnet, the network typically comprises a plurality of further subnets from which the select subnet is selected, for example with its local proximity to the request subnet taken into consideration.

A network component is a device which can be connected electronically to further devices in a network, for example in order to exchange data with said further devices via cable connections or cableless connections. For example, customary network components are computers, in particular, personal computers, printers, scanners, and the like.

The configuration of a subnet comprises both the network components connected in the subnet and the type of their connections to each other, for example the protocols used by said connections and/or whether the connections are based on cables or are cableless connections. Furthermore, the topology of the subnet is also an essential property. The transmitted information concerning the configuration can, therefore, comprise information about the network components connected in the subnet, about the type of their connections, about the subnet topography, and the like.

An advantageous embodiment of the invention provides that the information and the further information are transmitted at predefined time intervals. The time intervals can, for example, be software-related or hardware-related or defined on the basis of a message in the registration request.

An advantageous further development of the invention provides that the information and the further information are transmitted consecutively at regular time intervals. This is, for example, to advantage in that the requesting network component can immediately detect the failure of the selected network component by means of a non-arrival of further information.

A preferred embodiment of the invention provides that the further information concerning the configuration of the select subnet is transmitted whenever the configuration of the select subnet has changed in relation to a configuration which a previous transmission of information to the requesting network component concerned. In addition, information concerning the configuration of the select subnet is, preferably, not transmitted if there was no change in the configuration in relation to the previous transmission. This is to advantage in that no redundant or recurrent electronic data is exchanged among the subnets.

An appropriate further development of the invention provides that the further information concerning the configuration of the select subnet comprises at the later points in time information concerning changes in the configuration of the select subnet, which occurred after a previous transmission of information concerning the configuration of the select subnet to the requesting network component. Preferably, the only information transmitted is information about the changes in the configuration. In this manner, the electronic data to be transmitted can be limited to a necessary minimum.

An advantageous embodiment of the invention provides that the information and the further information concerning the configuration of the select subnet comprise an enumeration of select network components pertaining to the select subnet at the time of registration request. For example, the information may be a list of the network addresses of the select network components or a selection therefrom, preferably in tabular form.

Preferably, a further development of the invention provides that, subsequent to an evaluation of the information or the further information, the requesting network component transmits a detailed request to one or more further ones of the select network components. The detailed request can be used by one or more of the select network components to request further information. If one of the select network components is, for example, a printer to be activated by the requesting network component, the further information may comprise the size and assignment of the printer list and the like.

A preferred embodiment of the invention provides that the select subnet and/or the selected network component are/is determined from a plurality of select subnets and/or select network components by means of an automatic or semi-automatic selection method. The selection method may, for example, take the local distance of the subnets from each other and/or the characteristic values of access to the subnets and/or to the network components into consideration. Furthermore, subnet masks can be used in the selection methods.

If a semi-automatic selection method is applied, the selection is made under the supervision or at least with the help of a user or an administrator. If, for example, a user of the requesting network component intends to print a document, an appropriate printer must first be found in another subnet if such a printer fails to be present in the request subnet. In this case, it is not expedient if the found printer is positioned in any other subnet which is, perhaps, far from the requesting network component. In such cases, it is advantageous if the user or an administrator can specify the subnets in which a printer is to be found.

An advantageous further development of the invention provides that the transmitted information and/or the further information are/is, at least in part, transferred from the requesting network component to further ones of the request network components of the request subnet. Herein, the transmitted information and/or the further information are/is, preferably, transferred completely. The transfer can be made independently of the actual registration. By means of the transfer, the further request network components can receive the information concerning the select subnet without first having to communicate across their subnet boundary themselves. This information can, however, also be used by the further request network components to each transmit a further registration request to one or more of the select network components themselves.

An appropriate further development of the invention provides that the transmitted information and/or the further information are/is, at least in part, transferred from the requesting network component to all remaining request network components of the request subnet. The information can also be transmitted to the remaining request network components in a selective manner.

An advantageous embodiment of the invention provides that an unregistration request is transmitted from the requesting network component to the selected network component and that, in reaction to the unregistration request, the selected network component does not transmit any further information concerning the configuration of the select subnet to the requesting network component at later points in time. The registration of the requesting network component with the selected network component is, therefore, cancelled by means of the unregistration request. This prevents the selected network component from being unnecessarily utilized further. This is done appropriately when the requesting network component is to be removed from the request subnet.

An advantageous further development of the invention provides that, after having received the registration request from the requesting network component, the selected network component, on its part, transmits a further registration request to the requesting network component. The selected network component is, on its part, registered with the requesting network component by means of this further registration request. This is, therefore, a two-way or bidirectional registration. If provided with the appropriate address information, the selected network component can alternatively send the further registration request to another one of the request network components.

A preferred embodiment of the invention provides that data is exchanged in the network in a packet switched manner. The method is, appropriately, applied in a packet switched network, for example in an IP network.

### Drawing

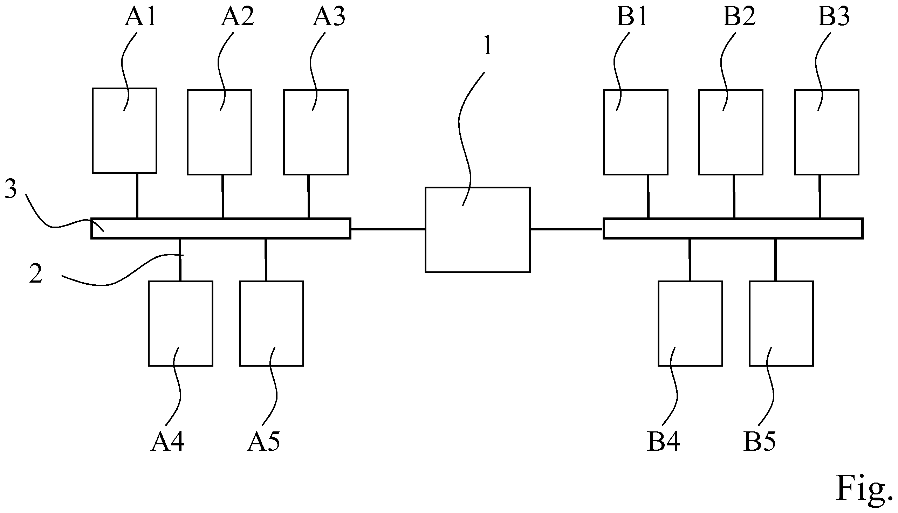

Below, the invention will be illustrated in more detail by means of exemplary embodiments and with reference being made to a drawing. Herein, the only figure is a schematic diagram of the structure of a network formed from two subnets.

### Exemplary embodiments

The figure shows a network which comprises two subnets A, B. In the following, one of the subnets A, B is referred to as request subnet A and the other one as select subnet B. In the request subnet A, a plurality of request network components A1, A2, ..., An are interconnected by means of data connections 2 via a data bus 3, whereas a plurality of select network components B1, B2, ..., Bm are interconnected in the select subnet B. The two subnets A, B form independent networks which are connected or "routed" to each other by means of a switching unit or gateway 1 in a data system. That means that it is possible to access one of the subnets A, B from the other one of the subnets A, B, for example by means of a "ping" request.

Below, a method will be illustrated by means of which a requesting network component A2 in the request subnet A can receive information concerning the select network components B1, B2, ..., Bm of the select subnet B, for example in order to access certain resources or services which are provided by one or more of the select network components B1, B2, ..., Bm, for example a printer service. To achieve this, the requesting network component A2 uses a selected network component B4 out of the select network components B1, B2, ..., Bm of the select subnet B.

Initially, the requesting network component A2 is informed about the selected network component B4. This is, preferably, achieved in an automatic, semi-automatic or manual step. If a semi-automatic step is applied, a user or administrator, for example, determines which subnets A, B are to be "visible" from which subnet A, B. If, for example, a further subnet is connected to the gateway 1, the user can determine that some or all of the request network components A1, A2, ..., An can only access the select network components B1, B2, ..., Bm or a selection therefrom.

Subsequently, the selection thus made is transmitted to the requesting network component A2 in a selection message. Preferably, the selection message comprises the network addresses of those select network components B1, B2, ..., Bm access to which is permitted to the requesting network component A2, said network addresses, for example, being the IP addresses in an IP network ("Internet Protocol"). The following HTTP message is an example of such a selection message.

```
     POST /discovery HTTP/1.0
     CONTENT-LENGTH: 225
     CONTENT-TYPE: text/xml; charset="utf-8"
     Request: NOTIFY_DISTAND_NETWORK
    
     <?xml version="1.0">
     <root>
       <device>
          <http-
          endpoint>http://192.168.3.13:8081/discovery</http-
          endpoint>
         <netmask>255.255.255.0</netmask>
       </device>
       <device>
          <http-
          endpoint>http://192.168.3.14:8081/discovery</http-
          endpoint>
         <netmask>255.255.255.0</netmask>
       </device>
     </root>
```

The associated response is as follows:

```
     HTTP/1.1 200 OK
     CONTENT-LENGTH: 0
```

As can be seen from the "Request" header line the content of which is "NOTIFY_DISTAND_NETWORK", the above HTTP message is a special message which is exclusively intended to inform a network component in a subnet about the network address of another network component of another subnet. An XML document in the body of the above HTTP message comprises information about two of the select network components B1, B2, ..., Bm out of the select subnet B, that is to say the HTTP address of each thereof as well as a network mask. The network mask indicates which ones of the select network components B1, B2, ..., Bm out of the select subnet B should be visible, that means which ones of the select network components B1, B2, ..., Bm may be used to feed back information in the event of a registration request.

As an alternative to a selection message, the selection of the requesting network component A2 can also be disclosed via a user interface. According to an embodiment of the method, it can, for example, be defined that the requesting network component A2 can communicate with the select network components B1, B2, ..., Bm out of the select subnet B, in order to access certain components out of the select subnet B which are spatially separated from the request subnet. The semi-automatic step requires communication between the user of the requesting network component A2 and a further user working at one of the select network components B1, B2, ..., Bm. During this communication, the further user informs the user of the requesting network component A2 about the IP address of one of the select network components B1, B2, ..., Bm. Herein, the two users may be one and the same person, for example if the two subnets A, B are spatially not very far from each other. Communication between the users can be verbal (for example by telephone) or in writing (for example by e-mail) or the like.

IP addresses of select network components B1, B2, ..., Bm out of the select subnet B can be transmitted to the requesting network component A2 by means of simple tools. Such a tool might be a program which is started on one of the select network components B1, B2, ..., Bm and which creates a list of a selection of or all of the select network components B1, B2, ..., Bm by means of a local discovery method, i.e. a discovery method running in the select subnet B. This list, which also comprises among its entries the IP address of the selected network component B4, is saved to a file together with an associated subnet mask which is available from a DHCP server (DHCP - "Dynamic Host Configuration Protocol"). This file can then be submitted to a second program as an information source, said second program being executed on one of the request network components A1, A2, ..., An. This second program can, subsequently, disclose the information from the file to the requesting network component A2, so that the requesting network component A2 can start to contact one or more of the select network components B1, B2, ..., Bm listed in the file.

After having received the selection message, the requesting network component A2 attempts to communicate with at least one of the select network components B1, B2, ..., Bm which are listed in the selection message, that is to say with the selected network component B4. Herein, the requesting network component A2 transmits a registration request to the selected network component B4. If necessary, the registration request can comprise an associated net mask contained in the selection message. An example of such a registration request in the form of a further HTTP message is specified below together with a potential response to the registration request.

```
     GET /discovery HTTP/1.0
     CONTENT-LENGTH: 511
     CONTENT-TYPE: text/xml; charset="utf-8"
     Request: REGISTER_DISTANT_DISCOVERY
    
     <?xml version="1.0">
     <root>
       <device>
         <uuid>6d1ec800-414c-1028-91b8-5af2f620287e</uuid>
          <http-
          endpoint>http://192.168.4.14:8081/discovery</http-
          endpoint>
       </device>
       <netmask>255.255.255.0</netmask>
     </root>
    
     HTTP/1.1 200 OK
     CONTENT-LENGTH: 2562
     CONTENT-TYPE: text/xml; charset="utf-8"
    
     <?xml version="1.0">
     <root>
       <device>
         <uuid>6d1ec800-414c-1028-91b8-2af2f620287e</uuid>
          <http-
          endpoint>http://192.168.3.13:8081/discovery</http-
          endpoint>
       </device>
       <device>
         ...
       </device>
     </root>
```

The registration request comprises information about the requesting network component A2 whereas the response thereto comprises information about the particular network components in the select subnet B in the form of a unique identifier ("Universally Unique Identifier", UUID) as well as an HTTP address.

In reaction to the registration request, the selected network component B4 collects information concerning the configuration of the select subnet B, for example a list of all select network components B1, B2, ..., Bm connected in the select subnet B at the time of receipt of the registration request or a selection therefrom. To achieve this, a local discovery method for finding some or all of the select network components B1, B2, ..., Bm is, preferably, already implemented in the select subnet B, said discovery method being applied prior to or shortly after the receipt of the registration request of the requesting network component A2 and local discovery method meaning that the discovery method is restricted to the select subnet B only. The discovery method can, for example, comprise a Multicast-based method, such as the discovery method of UPnP or MDNS.

The discovery method described herein, which goes across subnet boundaries, is independent of the selected local discovery method in the select subnet B. On the other hand, however, it is possible to base the method described herein on the standard for the local discovery method in the subnet, so as to achieve an additional degree of optimization, for example by using equivalent standards, such as the network protocol called "Simple Object Access Protocol" (SOAP), during the transmission of data packets.

The collected information concerning the configuration of the select subnet B is, subsequently, transmitted to the requesting network component A2. Furthermore, a registration of the requesting network component A2 is made in the selected network component B4 on the basis of the registration request, with the result that the requesting network component A1 can, at later points in time, be informed by the selected network component B4 about changes in the configuration of the select subnet B, for example about newly added components or about the fact that components were removed from or deactivated in the select subnet B. Herein, the selection message can also be interpreted as or combined with an order or a command to the requesting network component A2 to register with the selected network component B4. If the order or the command was initiated by a user, said user can be kept informed about the progress of the method and, if applicable, about a successful completion.

Should the information concerning the configuration of the select subnet transmitted from the selected network component B4 to the requesting network component A2 not be sufficient, the requesting network component A2 can, itself, send out requests in order to receive further information. If, for example, the selected network component B4 transmits a network address or IP address of an interested network component B3 to the requesting network component A2 together with said information, the requesting network component A2 can request further information from the interested network component B3 by means of a detailed request. If, for example, the interested network component B3 is a printer, such further information can, for example, comprise information concerning the printer settings or the print list. An example of a detailed request in the form of a further HTTP message is specified below together with a potential response to the detailed request.

```
     GET /discovery HTTP/1.0
     CONTENT-LENGTH: 0
     CONTENT-TYPE: text/xml; charset="utf-8"
     Request: GET_DEVICE_INFO
    
     HTTP/1.1 200 OK
     CONTENT-LENGTH: 2562
     CONTENT-TYPE: text/xml; charset="utf-8"
    
     <?xml version="1.0">
     <root>
       <device>
         <name>MyDevice</name>
         <uuid>6d1ec800-414c-1028-91b8-2af2f620287e</uuid>
         <service>
           <name>LoadService</name>
           <uuid>6d1ec800-414c-1028-91b8-
     2af2f6202880</uuid>
           <endpoint>
             <protocol>SimpleSoap</protocol>
             <uri>http://141.11.90.225:3000/simplesoap/loads
             ervice</uri>
           </endpoint>
         </service>
         <service>
           <name>SaveService</name>
           <uuid>6d1ec800-414c-1028-91b8-
     2af2f6202881</uuid>
           <endpoint>
             <protocol>SimpleSoap</protocol>
    
     <uri>http://141.11.90.225:3000/simplesoap</uri>
           </endpoint>
         </service>
       </device>
     </root>
```

Owing to the information transmitted by the selected network component B4 and, if applicable, to the additional information requested by means of the detailed request, the requesting network component A2 now knows the configuration of the select subnet B at the time of registration request at least in part. For example, the information known to the requesting network component A2 may comprise the network addresses of a plurality or all of the select network components B1, B2, ..., Bm. Thereupon, the requesting network component A2 can access the select network components B1, B2, ..., Bm known to it, in order to use services they provide.

Subsequently, the requesting network component A2 can transfer the information it knows about the select network components B1, B2, ..., Bm to the others of the request network components A1, ..., An, either as a whole or in part, with the result that, thereupon, some or all of the select network components B1, B2, ..., Bm are known to some or all of the request network components A1, A2, ..., An, for example on the basis of their network addresses. The transfer of this information from the requesting network component A2 to the remaining ones of the request network components A2, ..., An is advantageous irrespective of whether the registration request actually results in a registration of the requesting network component A2 with the selected network component B4, that is to say whether information concerning the configuration of the select subnet B is transmitted to the requesting network component A2 at later points in time as well.

Finally, the remaining request network components A1, ..., An can each, on their part, address themselves to an appropriate one of the select network components B1, B2, ..., Bm with a further registration request. The remaining request network components A1, ..., An can also be requested to do so by an order or a command, for example by means of a message similar to the selection message described above. In this case, the request network components A1, A2, ..., An record the particular time of receipt of the order or the command together with the information obtained. Preferably, the request network components A1, A2, ..., An do not all send their respective registration requests to the same select network component B1, B2, ..., Bm, so that the latter is not overloaded. To achieve this, each of the request network components A1, A2, ..., An can, if possible, address itself to a different one of the select network components B1, B2, ..., Bm.

The method described is a unidirectional method. That means that, after it has been applied, all select network components B1, B2, ..., Bm out of the select subnet B are known to the request network components A1, A2, ..., An out of the request subnet A, however not vice versa. In other words, individual ones of the select network components B1, B2, ..., Bm have knowledge only of those of the request network components A1, A2, ..., An from which they received a registration request and which they registered. This method is advantageously supplemented by also providing a bidirectional relationship. This can, for example, be indicated by means of appropriate flags in the registration request. After having received the registration request from the requesting network component A2, the selected network component B4 could, for example, on its part and in this case, transmit a further registration request to the requesting network component A2 or to another one of the request network components A1, ..., An.

As described above, the selected network component B4 keeps the requesting network component A2 informed about changes in the configuration, for example topology changes, in the select subnet B at later points in time. Such changes in configuration can also comprise elimination of the selected network component B4 itself from the select subnet B. If the selected network component B4 is able to anticipate this and informs the requesting network component A2 about this early enough, the latter can register with another one of the select network components B1, B2, ..., Bm. In order to provide for the case that the selected network component B4, if removed from the select subnet B too abruptly, cannot send the appropriate information, the existence of the network component B4 is, preferably, checked by the requesting network component A2 automatically and continuously.

If request network components A1, A2, ..., An of the request subnet A received the command to register with select network components B1, B2, ..., Bm of a select subnet B, registration should, preferably, also be possible if components were removed from or deactivated in one or both of the subnets A, B. Starting from the example below, it is assumed that an example network component A3 was deactivated in the request subnet A and is now reactivated or powered up. After the other ones of the request network components A1, A2, ..., An of the request subnet A were found or detected by applying a local discovery method, permanent recordings of the example network components A3 are consulted to find out whether the latter had, in the past, received orders or commands to register with a further subnet, for example by means of a registration request to the selected network component B4 of the select subnet B. The permanent recordings can, for example, be saved in a permanent memory or on a hard disk.

If this is the case, it has, for the start, to be verified whether the network address of the example network component A3 has essentially changed in the meantime, that is to say whether the example network component A3, after having been deactivated and activated, is residing in a subnet that is different from the original request subnet A. In this case, the order saved in the permanent recordings is, perhaps, not applicable any longer. If, however, the example network component A3 is still connected in the request subnet A, it can, preferably, first demand from the remaining ones of the request network components A1, A2, ..., An that they provide information about whether they know about orders or commands to register with other subnets or whether they know about commands to cancel such a registration.

The information thereupon received is compared with the permanent recordings of the example network component A3. This comparison checks, in particular, one or more of the following items, wherein the check does not necessarily have to follow the order specified.

At first, it is checked whether, on the other hand, one of the remaining request network components A1, A2, ..., An recorded a command to cancel the registration to the select subnet B for which the example network component A3 recorded a command to set up the registration. If this is the case and if the cancellation command was given more recently than the setup command, that is to say if it was transmitted at a later point in time, the permanent recordings of the example network component A3 are modified and updated accordingly. In this case, there will not be any registration. If, however, the cancellation command is older, the remaining request network components A1, A2, ..., An are informed about the more recent setup command, with the result that all request network components A1, A2, ..., An of the request subnet A register with the select network components B1, B2, ..., Bm.

Then, it is checked whether one of the remaining request network components A1, A2, ..., An saved a command to set up the registration with the select subnet B whereas the example network component A3, on the other hand, saved a command to cancel the registration. If this is the case and if the setup command was given more recently than the cancellation command, the permanent recordings of the example network component A3 are modified and updated accordingly, and the example network component A3 registers with the appropriate select network component B1, B2, ..., Bm. If, however, the setup command is older, the remaining request network components A1, A2, ..., An are informed about the more recent cancellation command, with the result that all request network components A1, A2, ..., An of the request subnet A again unregister with the particular select network component B1, B2, ..., Bm, that is to say they cancel the registration.

Then, it is checked whether one of the remaining request network components A1, A2, ..., An saved a command for setting up the registration with a network component of a different subnet (not illustrated), about which the example network component A3 does not have any information. In this case, information concerning this command is applied to the permanent recordings of the example network component A3, and the example network component A3 registers with the network component of the different subnet.

Finally, it is checked whether one of the remaining request network components A1, A2, ..., An saved a command to cancel the registration with a network component of a different subnet (not illustrated), about which the example network component A3 does not have any information. In this case, information concerning this command is applied to the permanent recordings of the example network component A3. Using the measures described in reaction to appropriate comparison results, network components A1, ..., An, B1, ..., Bm out of subnets A, B can be found even if individual ones or even all of the network components A1, ..., An; B1, ..., Bm of a subnet A, B were deactivated and reactivated.

Preferably, it is possible to cancel the registration of the requesting network component A2 with the selected network component B4 at a later point in time, so that the selected network component B4 does not transmit any further information concerning the configuration of the select subnet B to the requesting network component A2. As a result, the discovery method across subnet boundaries is, therefore, cancelled. The cancellation of the registration is, preferably, initiated by a user or administrator, as is the case with the registration itself. This can again be achieved via a user interface or a message packet which can, for example, have a structure that is similar to the selection message described above wherein, however, the request type "UNNOTIFY_DISTANT_NETWORK" is, for example, used in the stead of "NOTIFY_DISTANT_NETWORK".

In reaction to such an order to cancel the registration, the requesting network component A2 first checks whether it knows a subnet in which a network component having a network address mentioned in this order is present or was present, for example the select subnet B with the selected network component B4. If this is the case, an unregistration request is sent to this network component to cancel the registration. The unregistration request can comprise a data packet as described above in conjunction with the detailed request wherein, however, the request type has changed from "REGISTER_DISTANT_DISCOVERY" to "UNREGISTER_DISTANT_DISCOVERY". After such a data packet has been received by the selected network component B4, it will not send any further information, for example about topology changes in the select subnet B, to the requesting network component A2.

Over and above this, all remaining request network components A1, ..., An out of the request subnet A can, in a further step, be informed about the unregistration, for example also by means of a modified selection message as described above. Preferably, the registrations of the remaining request network components A1, ..., An with the particular ones of the selected network components B1, B2, ..., Bm are cancelled as well. Finally, the request network components A1, A2, ..., An add an information to their permanent recordings about when the registration for the select subnet B was cancelled.

The features of the invention disclosed in the above description, the claims and the drawing can be of importance to the implementation of the invention in its different embodiments, both individually and in any combinations desired.

## Claims

1. A method for managing network components in a network, comprising a request subnet (A) with request network components (A1, A2, ..., An) and a select subnet (B) with select network components (B1, B2, ..., Bm), wherein the requesting network component (A3) out of the request network components (A1, A2, ..., An) of the request subnet (A) transmits a registration request to a selected network component (B4) out of the select network components (B1, B2, ..., Bm) of the select subnet (B) and receives, in response to the registration request, from the selected network component (B4) information concerning the configuration of the select subnet (B) at the time of registration request, and further receives, in response to the registration request, from the selected network component (B4) further information concerning the configuration of the select subnet (B) at a later point in time which is chronologically following the registration request, **characterized in that**, when the requesting network component (A3) in the request subnet (A) has been switched off and is switched back on again, it is searched in permanent records of the request network component (A3) if they contain registration requests from the past for registering the requesting network component (A3) in another subnet (B), and if affirmative, it is checked if the requesting network component (A3) now is in a different subnet, by comparing the network address of the requesting network component (A3) with the network address found in the permanent records, and if the requesting network component (A3) is still in the same subnet (A), it is verified if the registration request from the past is still not outdated by requesting information about past registrations from other network components in the request subnet (A), and wherein the registration of the selected network component in the select subnet is made again, if the verification of the registration request from the past is positive.

2. The method according to Claim 1,
wherein the information and the further information is transmitted at predefined time intervals.

3. The method according to Claim 1 or 2, wherein the information and the further information are consecutively transmitted at regular intervals.

4. The method according to Claim 1,
wherein the further information concerning the configuration of the select subnet (B) is transmitted whenever the configuration of the select subnet (B) has changed in relation to a configuration which a previous transmission of information to the requesting network component (A2) concerned.

5. The method according to anyone of the preceding claims,
wherein the further information concerning the configuration of the select subnet (B) comprises at the later points in time information concerning changes in the configuration of the select subnet (B), which occurred after a previous transmission of information concerning the configuration of the select subnet (B) to the requesting network component (A2).

6. The method according to anyone of the preceding claims,
wherein the information and the further information concerning the configuration of the select subnet (B) comprise an enumeration of select network components (B1, B2, ..., Bm) pertaining to the select subnet (B) at the time of registration request.

7. The method according to Claim 6,
wherein, subsequent to an evaluation of the information or the further information, the requesting network component (A2) transmits a detailed request to one or more of the further select network components (B1, B2, ..., Bm).

8. The method according to anyone of the preceding claims,
wherein the select subnet (B) and/or the selected network component (B4) are/is determined from a plurality of select subnets (B) and/or select network components (B1, B2, ..., Bm) by means of an automatic selection method or with the help of a user or an administrator.

9. The method according to anyone of the preceding claims,
wherein the transmitted information and/or the further information are/is, at least in part, transferred from the requesting network component (A2) to other request network components (A1, ..., An) of the request subnet (A).

10. The method according to Claim 9,
wherein the transmitted information and/or the further information are/is, at least in part, transferred from the requesting network component (A2) to all remaining request network components (A1, ..., An) of the request subnet.

11. The method according to anyone of the preceding claims,
wherein an unregistration request is transmitted from the requesting network component (A2) to the selected network component (B4) and, in reaction to the unregistration request, the selected network component (B4) does not transmit any further information concerning the configuration of the select subnet (B) to the requesting network component (A2) at later points in time.

12. The method according to anyone of the preceding claims,
wherein, after having received the registration request from the requesting network component (A2), the selected network component (B4), on its part, transmits a further registration request to the requesting network component (A2).

13. The method according to anyone of the preceding claims,
wherein data is exchanged in the network in a packet switched manner.

14. A network component (A3) that can serve as a request network component in a network, the network comprising a request subnet (A) with request network components (A1, A2, ..., An) and a select subnet (B) with select network components (B1, B2, ..., Bm), wherein the network component (A3) is adapted to transmit a registration request to a selected network component (B4) out of the select network components (B1, B2, ..., Bm) of the select subnet (B) and receive, in response to the registration request from the selected network component (B4) information concerning the configuration of the select subnet (B) at the time of registration request, and further receive, in response to the registration request, from the selected network component (B4),further information concerning the configuration of the select subnet (B) at a later point in time which is chronologically following the registration request, **characterized in that**, when the network component (A3) has been switched off and is switched back on again, it is searched in permanent records of the network component (A3) if they contain registration requests from the past for registering the network component (A3) in another subnet (B), and if affirmative, it is checked if the network component (A3) now is in a different subnet, by comparing the network address of the network component with the network address found in the permanent records; and_if the network component (A3) is still in the same subnet (A), it is verified if the registration request from the past is still not outdated by requesting information about past registrations from other network components in the request subnet (A), and wherein the registration of the selected network component in the select subnet is made again, if the verification of the registration request from the past is positive.

## Patentansprüche

1. Verfahren zum Managen von Netzkomponenten in einem Netz,
wobei das Verfahren ein Anforderungsteilnetz (A) mit Anforderungsnetzkomponenten (A1, A2, ..., An) und ein Auswahlteilnetz (B) mit Auswahlnetzkomponenten (B1, B2, ..., Bm) umfasst, wobei die anfordernde Netzkomponente (A3) unter den Anforderungsnetzkomponenten (A1, A2, ..., An) des Anforderungsteilnetzes (A) an eine ausgewählte Netzkomponente (B4) unter den Auswahlnetzkomponenten (B1, B2, ..., Bm) des Auswahlteilnetzes (B) eine Registrierungsanforderung sendet und als Reaktion auf die Registrierungsanforderung von der ausgewählten Netzkomponente (B4) Informationen empfängt, die die Konfiguration des Auswahlnetzes (B) zum Zeitpunkt der Registrierungsanforderung betreffen, und ferner als Reaktion auf die Registrierungsanforderung von der ausgewählten Netzkomponente (B4) ferner Informationen empfängt, die die Konfiguration des Auswahlteilnetzes (B) zu einem späteren Zeitpunkt, der chronologisch auf die Registrierungsanforderung folgt, betreffen, **dadurch gekennzeichnet, dass**, wenn die anfordernde Netzkomponente (A3) in dem Anforderungsteilnetz (A) ausgeschaltet worden ist und wieder eingeschaltet wird, in permanenten Datensätzen der Anforderungsnetzkomponente (A3) gesucht wird, ob sie Registrierungsanforderungen aus der Vergangenheit zum Registrieren der anfordernden Netzkomponente (A3) in einem anderen Teilnetz (B) enthalten, und bei positiver Antwort durch Vergleichen der Netzadresse der anfordernden Netzkomponente (A3) mit der in den permanenten Datensätzen ermittelten Netzadresse geprüft wird, ob die anfordernde Netzkomponente (A3) jetzt in einem anderen Teilnetz ist, und verifiziert wird, ob die Registrierungsanforderung aus der Vergangenheit immer noch nicht veraltet ist, indem von anderen Netzkomponenten in dem Anforderungsteilnetz (A) Informationen über frühere Registrierungen angefordert werden, falls die anfordernde Netzkomponente (A3) weiterhin in demselben Teilnetz (A) ist, und wobei die Registrierung der ausgewählten Netzkomponente in dem Auswahlteilnetz erneut vorgenommen wird, falls die Verifizierung der Registrierungsanforderung aus der Vergangenheit positiv ist.

2. Verfahren nach Anspruch 1,
wobei die Informationen und die weiteren Informationen in vorgegebenen Zeitintervallen gesendet werden.

3. Verfahren nach Anspruch 1 oder 2, wobei die Informationen und die weiteren Informationen in regelmäßigen Intervallen nacheinander gesendet werden.

4. Verfahren nach Anspruch 1,
wobei die weiteren Informationen, die die Konfiguration des Auswahlteilnetzes (B) betreffen, jedes Mal gesendet werden, wenn sich die Konfiguration des Auswahlteilnetzes (B) in Bezug auf eine Konfiguration, die eine vorhergehende Sendung von Informationen an die anfordernde Netzkomponente (A2) betroffen hat, geändert hat.

5. Verfahren nach einem der vorhergehenden Ansprüche, wobei die weiteren Informationen, die die Konfiguration des Auswahlteilnetzes (B) betreffen, zu späteren Zeitpunkten Informationen umfassen, die Änderungen der Konfiguration des Auswahlteilnetzes (B) betreffen, die nach einer vorhergehenden Sendung von Informationen, die die Konfiguration des Auswahlteilnetzes (B) betreffen, an die anfordernde Netzkomponente (A2) aufgetreten sind.

6. Verfahren nach einem der vorhergehenden Ansprüche,
wobei die Informationen und die weiteren Informationen, die die Konfiguration des Auswahlteilnetzes (B) betreffen, eine Aufzählung von Auswahlnetzkomponenten (B1, B2, ..., Bm), die das Auswahlteilnetz (B) zum Zeitpunkt der Registrierungsanforderung betreffen, umfassen.

7. Verfahren nach Anspruch 6,
wobei die anfordernde Netzkomponente (A2) nach einer Bewertung der Informationen oder der weiteren Informationen eine ausführliche Anforderung an eine oder mehrere der weiteren Auswahlnetzkomponenten (B1, B2, ..., Bm) sendet.

8. Verfahren nach einem der vorhergehenden Ansprüche, wobei das Auswahlteilnetz (B) und/oder die ausgewählte Netzkomponente (B4) mittels eines automatischen Auswahlverfahrens oder mit Hilfe eines Nutzers oder eines Administrators aus mehreren Auswahlteilnetzen (B) und/oder Auswahlnetzkomponenten (B1, B2, ..., Bm) bestimmt wird/werden.

9. Verfahren nach einem der vorhergehenden Ansprüche, wobei die gesendeten Informationen und/oder die weiteren Informationen mindestens teilweise von der anfordernden Netzkomponente (A2) an andere Anforderungsnetzkomponenten (A1, ..., An) des Anforderungsteilnetzes (A) gesendet wird/werden.

10. Verfahren nach Anspruch 9,
wobei die gesendeten Informationen und/oder die weiteren Informationen mindestens teilweise von der anfordernden Netzkomponente (A2) an alle verbleibenden Anforderungsnetzkomponenten (A1, ..., An) des Anforderungsteilnetzes gesendet werden.

11. Verfahren nach einem der vorhergehenden Ansprüche, wobei von der anfordernden Netzkomponente (A2) eine Abmeldeanforderung an die ausgewählte Netzkomponente (B4) gesendet wird und die ausgewählte Netzkomponente (B4) als Reaktion auf die Abmeldeanforderung zu späteren Zeitpunkten keine weiteren Informationen, die die Konfiguration des Auswahlteilnetzes (B) betreffen, an die anfordernde Netzkomponente (A2) sendet.

12. Verfahren nach einem der vorhergehenden Ansprüche, wobei die ausgewählte Netzkomponente (B4) ihrerseits eine weitere Registrierungsanforderung an die anfordernde Netzkomponente (A2) sendet, nachdem sie die Registrierungsanforderung von der anfordernden Netzkomponente (A2) empfangen hat.

13. Verfahren nach einem der vorhergehenden Ansprüche, wobei Daten in dem Netz auf paketvermittelte Weise ausgetauscht werden.

14. Netzkomponente (A3), die als eine Anforderungsnetzkomponente in einem Netz dienen kann, wobei das Netz ein Anforderungsteilnetz (A) mit Anforderungsnetzkomponenten (A1, A2, ..., An) und ein Auswahlteilnetz (B) mit Auswahlnetzkomponenten (B1, B2, ..., Bm) umfasst, wobei die Netzkomponente (A3) dafür ausgelegt ist, an eine ausgewählte Netzkomponente (B4) unter den Auswahlnetzkomponenten (B1, B2, ..., Bm) des Auswahlteilnetzes (B) eine Registrierungsanforderung zu senden und als Reaktion auf die Registrierungsanforderung von der ausgewählten Netzkomponente (B4) Informationen zu empfangen, die die Konfiguration des Auswahlnetzes (B) zum Zeitpunkt der Registrierungsanforderung betreffen, und ferner als Reaktion auf die Registrierungsanforderung von der ausgewählten Netzkomponente (B4) ferner Informationen zu empfangen, die die Konfiguration des Auswahlteilnetzes (B) zu einem späteren Zeitpunkt, der chronologisch auf die Registrierungsanforderung folgt, betreffen, **dadurch gekennzeichnet, dass**, wenn die Netzkomponente (A3) ausgeschaltet worden ist und wieder eingeschaltet wird, in permanenten Datensätzen der Netzkomponente (A3) gesucht wird, ob sie Registrierungsanforderungen aus der Vergangenheit zum Registrieren der Netzkomponente (A3) in einem anderen Teilnetz (B) enthalten, und bei positiver Antwort durch Vergleichen der Netzadresse der Netzkomponente mit der in den permanenten Datensätzen ermittelten Netzadresse geprüft wird, ob die Netzkomponente (A3) jetzt in einem anderen Teilnetz ist; und verifiziert wird, ob die Registrierungsanforderung aus der Vergangenheit immer noch nicht veraltet ist, indem von anderen Netzkomponenten in dem Anforderungsteilnetz (A) Informationen über frühere Registrierungen angefordert werden, falls die Netzkomponente (A3) weiterhin in demselben Teilnetz (A) ist, und wobei die Registrierung der ausgewählten Netzkomponente in dem Auswahlteilnetz erneut vorgenommen wird, falls die Verifizierung der Registrierungsanforderung aus der Vergangenheit positiv ist.

## Revendications

1. Procédé pour gérer des composants de réseau dans un réseau, comprenant un sous-réseau de requête (A) avec des composants de réseau de requête (A1, A2, ..., An) et un sous-réseau de sélection (B) avec des composants de réseau de sélection (B1, B2, ..., Bm), dans lequel le composant de réseau demandeur (A3) parmi les composants de réseau de requête (A1, A2, ..., An) du sous-réseau de requête (A) transmet une requête d'enregistrement à un composant de réseau sélectionné (B4) parmi les composants de réseau de sélection (B1, B2, ..., Bm) du sous-réseau de sélection (B) et reçoit, en réponse à la requête d'enregistrement, du composant de réseau sélectionné (B4), des informations concernant la configuration du sous-réseau de sélection (B) au moment de la requête d'enregistrement, et reçoit en outre, en réponse à la requête d'enregistrement, du composant de réseau sélectionné (B4), d'autres informations concernant la configuration du sous-réseau de sélection (B) à un instant ultérieur qui se situe chronologiquement après la requête d'enregistrement, **caractérisé en ce que**, lorsque le composant de réseau demandeur (A3) dans le sous-réseau de requête (A) a été éteint, puis rallumé, il est recherché dans les enregistrements permanents du composant de réseau de requête (A3) s'ils contiennent des requêtes d'enregistrement passées pour l'enregistrement du composant de réseau demandeur (A3) dans un autre sous-réseau (B), et si c'est le cas, il est vérifié si le composant de réseau demandeur (A3) est désormais dans un sous-réseau différent, en comparant l'adresse réseau du composant de réseau demandeur (A3) avec l'adresse réseau trouvée dans les enregistrements permanents, et si le composant de réseau demandeur (A3) est toujours dans le même sous-réseau (A), il est vérifié si la requête d'enregistrement passée n'est toujours pas obsolète en demandant des informations sur les enregistrements passés à d'autres composants de réseau dans le sous-réseau de requête (A), et dans lequel l'enregistrement du composant de réseau sélectionné dans le sous-réseau de sélection est effectué à nouveau, si la vérification de la requête d'enregistrement passée est positive.

2. Procédé selon la revendication 1, dans lequel les informations et les autres informations sont transmises à des intervalles de temps prédéfinis.

3. Procédé selon la revendication 1 ou 2, dans lequel les informations et les autres informations sont transmises de manière consécutive à des intervalles réguliers.

4. Procédé selon la revendication 1, dans lequel les autres informations concernant la configuration du sous-réseau de sélection (B) sont transmises dès lors que la configuration du sous-réseau de sélection (B) a changé par rapport à une configuration concernée par une transmission précédente d'informations au composant de réseau demandeur (A2).

5. Procédé selon l'une des revendications précédentes, dans lequel les autres informations concernant la configuration du sous-réseau de sélection (B) comprennent aux instants ultérieurs des informations concernant des changements dans la configuration du sous-réseau de sélection (B), qui se sont produits après une transmission précédente d'informations concernant la configuration du sous-réseau de sélection (B) au composant de réseau demandeur (A2).

6. Procédé selon l'une des revendications précédentes, dans lequel les informations et les autres informations concernant la configuration du sous-réseau de sélection (B) comprennent une énumération de composants de réseau de sélection (B1, B2, ..., Bm) se rapportant au sous-réseau de sélection (B) au moment de la requête d'enregistrement.

7. Procédé selon la revendication 6, dans lequel, suite à une évaluation des informations ou des autres informations, le composant de réseau demandeur (A2) transmet une requête détaillée à un ou plusieurs des autres composants de réseau de sélection (B1, B2, ..., Bm).

8. Procédé selon l'une des revendications précédentes, dans lequel le sous-réseau de sélection (B) et/ou le composant de réseau sélectionné (B4) sont déterminés à partir d'une pluralité de sous-réseaux de sélection (B) et/ou de composants de réseau de sélection (B1, B2, ..., Bm) à l'aide d'un procédé de sélection automatique ou avec l'aide d'un utilisateur ou d'un administrateur.

9. Procédé selon l'une des revendications précédentes, dans lequel les informations transmises et/ou les autres informations sont, au moins en partie, transférées du composant de réseau demandeur (A2) aux autres composants de réseau de requête (A1, ..., An) du sous-réseau de requête (A).

10. Procédé selon la revendication 9, dans lequel les informations transmises et/ou les autres informations sont, au moins en partie, transférées du composant de réseau demandeur (A2) à tous les composants de réseau de requête restants (A1, ..., An) du sous-réseau de requête.

11. Procédé selon l'une des revendications précédentes, dans lequel une requête de désenregistrement est transmise du composant de réseau demandeur (A2) au composant de réseau sélectionné (B4) et, en réaction à la requête de désenregistrement, le composant de réseau sélectionné (B4) ne transmet pas d'autres informations concernant la configuration du sous-réseau de sélection (B) au composant de réseau demandeur (A2) à des instants ultérieurs.

12. Procédé selon l'une des revendications précédentes, dans lequel, après avoir reçu la requête d'enregistrement du composant de réseau demandeur (A2), le composant de réseau sélectionné (B4), de son côté, transmet une autre requête d'enregistrement au composant de réseau demandeur (A2).

13. Procédé selon l'une des revendications précédentes, dans lequel des données sont échangées dans le réseau par commutation de paquets.

14. Composant de réseau (A3) pouvant servir de composant de réseau de requête dans un réseau, le réseau comprenant un sous-réseau de requête (A) avec des composants de réseau de requête (A1, A2, ..., An) et un sous-réseau de sélection (B) avec des composants de réseau de sélection (B1, B2, ..., Bm), dans lequel le composant de réseau (A3) est adapté pour transmettre une requête d'enregistrement à un composant de réseau sélectionné (B4) parmi les composants de réseau de sélection (B1, B2, ..., Bm) du sous-réseau de sélection (B) et pour recevoir, en réponse à la requête d'enregistrement, du composant de réseau sélectionné (B4), des informations concernant la configuration du sous-réseau de sélection (B) au moment de la requête d'enregistrement, et pour recevoir en outre, en réponse à la requête d'enregistrement, du composant de réseau sélectionné (B4), d'autres informations concernant la configuration du sous-réseau de sélection (B) à un instant ultérieur qui se situe chronologiquement après la requête d'enregistrement, **caractérisé en ce que**, lorsque le composant de réseau (A3) a été éteint, puis rallumé, il est recherché dans les enregistrements permanents du composant de réseau (A3) s'ils contiennent des requêtes d'enregistrement passées pour l'enregistrement du composant de réseau (A3) dans un autre sous-réseau (B), et si c'est le cas, il est vérifié si le composant de réseau (A3) est désormais dans un sous-réseau différent, en comparant l'adresse réseau du composant de réseau avec l'adresse réseau trouvée dans les enregistrements permanents ; et, si le composant de réseau (A3) est toujours dans le même sous-réseau (A), il est vérifié si la requête d'enregistrement passée n'est toujours pas obsolète en demandant des informations sur les enregistrements passés à d'autres composants de réseau dans le sous-réseau de requête (A), et dans lequel l'enregistrement du composant de réseau sélectionné dans le sous-réseau de sélection est effectué à nouveau, si la vérification de la requête d'enregistrement passée est positive.
